# EUROPEAN PATENT APPLICATION

(11) **EP 4 667 911 A1**
(43) Date of publication of application: **24.12.2025**
(21) Application number: 24756770.4
(22) Date of filing: 07.02.2024
(51) Int. Cl.: G01N 21/64

(54) **IMAGE ACQUISITION DEVICE, IMAGE ACQUISITION METHOD, AND IMAGE ACQUISITION PROGRAM**

(30) Priority: 15.02.2023 JP 2023021938
(71) Applicant: Yokogawa Electric Corporation, Tokyo 180-8750 (JP)
(72) Inventor: TADENUMA, Takashi, Musashino-shi, Tokyo 180-8750 (JP); MIYAUCHI, Yuki, Musashino-shi, Tokyo 180-8750 (JP); TAGUCHI, Tomoyuki, Musashino-shi, Tokyo 180-8750 (JP)
(74) Representative: Winter, Brandl - Partnerschaft mbB
(86) International application number: PCT/JP2024/004073
(87) International publication number: WO 2024/171922

(57) **Abstract**

An image acquisition apparatus 100 acquires a first fluorescence image of a DNA microarray A imaged in a first time period by an imaging apparatus 1 and a second fluorescence image of the DNA microarray A imaged in a second time period by the imaging apparatus, generates a corrected second fluorescence image resulting from correction of a second fluorescence intensity of a fluorescent spot that generates fluorescence in the second fluorescence image, the correction being based on a first fluorescence intensity of a fluorescent spot that generates fluorescence in the first fluorescence image, and generates an additively corrected fluorescence image resulting from correction of the first fluorescence image, by adding the corrected second fluorescence image to the first fluorescence image.

## Description

### Field

The present invention relates to an image acquisition apparatus, an image acquisition method, and an image acquisition program.

### Background

A DNA microarray method using a DNA microarray has been known as a technique for measuring a target included in a test sample, the target having a nucleic acid sequence of, for example, a specific deoxyribonucleic acid (DNA). The DNA microarray method is a technique for measuring detection target molecules by utilizing a property of the detection target molecules in the test sample added into the DNA microarray, the detection target molecules having been modified with fluorescent molecules, the property being a property of being collected by detection probes of the DNA microarray through hybridization. In the DNA microarray method, calculating a brightness value or a quantity of light for a DNA spot portion by image analysis of a fluorescence image enables, in addition to a determination of whether or not any detection target molecule is included in the test sample, a measurement of an amount of detection target molecules included in the test sample.

### Citation List

### Patent Literature

Patent Literature 1: Japanese Laid-open Patent Publication No. 2008-203138

### Summary

### Technical Problem

However, acquiring a fluorescence image enabling accurate detection is difficult in the above described DNA microarray method. For example, in a case where a measurement time period is set to a long time period in the above described DNA microarray method, photobleaching of a fluorescent dye may generate an error in an estimation result for the amount of the detection target molecules.

The present invention has been made in view of the above and an object thereof is to acquire a fluorescence image enabling accurate detection.

### Solution to Problem

The present invention provides an image acquisition apparatus, including an acquisition unit that acquires a first fluorescence image of a measurement target specimen imaged in a first time period by an imaging apparatus and a second fluorescence image of the measurement target specimen imaged in a second time period by the imaging apparatus, and a generation unit that generates a corrected fluorescence image resulting from correction of a second fluorescence intensity of a fluorescent spot that generates fluorescence in the second fluorescence image, the correction being based on a first fluorescence intensity of a fluorescent spot that generates fluorescence in the first fluorescence image, and generates an additively corrected fluorescence image resulting from correction of the first fluorescence image, by adding the corrected fluorescence image to the first fluorescence image.

The present invention provides an image acquisition method, wherein a computer executes a process including acquiring a first fluorescence image of a measurement target specimen imaged in a first time period by an imaging apparatus and a second fluorescence image of the measurement target specimen imaged in a second time period by the imaging apparatus, generating a corrected fluorescence image resulting from correction of a second fluorescence intensity of a fluorescent spot that generates fluorescence in the second fluorescence image, the correction being based on a first fluorescence intensity of a fluorescent spot that generates fluorescence in the first fluorescence image, and generating an additively corrected fluorescence image resulting from correction of the first fluorescence image, by adding the corrected fluorescence image to the first fluorescence image.

The present invention provides an image acquisition program that causes a computer to execute a process including acquiring a first fluorescence image of a measurement target specimen imaged in a first time period by an imaging apparatus and a second fluorescence image of the measurement target specimen imaged in a second time period by the imaging apparatus, generating a corrected fluorescence image resulting from correction of a second fluorescence intensity of a fluorescent spot that generates fluorescence in the second fluorescence image, the correction being based on a first fluorescence intensity of a fluorescent spot that generates fluorescence in the first fluorescence image, and generating an additively corrected fluorescence image resulting from correction of the first fluorescence image, by adding the corrected fluorescence image to the first fluorescence image.

### Advantageous Effects of Invention

The present invention has an effect of enabling a fluorescence image to be acquired, the fluorescence image enabling accurate detection.

### Brief Description of Drawings

FIG. 1 is a diagram illustrating an example of a flow of processing for a DNA microarray method.
FIG. 2 is a diagram for illustration of fluorescence intensity of a fluorescence image, according to a reference technique.
FIG. 3 is a diagram illustrating an example of a configuration of an image acquisition system according to an embodiment.
FIG. 4 is a block diagram illustrating an example of a configuration of an image acquisition apparatus and an imaging apparatus, according to the embodiment.
FIG. 5 is a diagram illustrating a first specific example of fluorescence intensity of a fluorescence image, according to the embodiment.
FIG. 6 is a diagram illustrating a second specific example of fluorescence intensity of a fluorescence image, according to the embodiment.
FIG. 7 is a diagram illustrating a third specific example of fluorescence intensity of a fluorescence image, according to the embodiment.
FIG. 8 is a flowchart illustrating an example of flow of an image acquisition process according to the embodiment.
FIG. 9 is a diagram illustrating an example of a hardware configuration according to the embodiment. Description of Embodiments

An image acquisition apparatus, an image acquisition method, and an image acquisition program, according to one embodiment of the present invention will hereinafter be described in detail by reference to the drawings. The present invention is not to be limited by the embodiment described hereinafter.

### Embodiment

A configuration of an image acquisition system 1000, a configuration of an image acquisition apparatus 100, for example, and a flow of each process, according to an embodiment will hereinafter be described in sequence, and effects of the embodiment will be described lastly.

### 1. Configuration of Image Acquisition System 1000

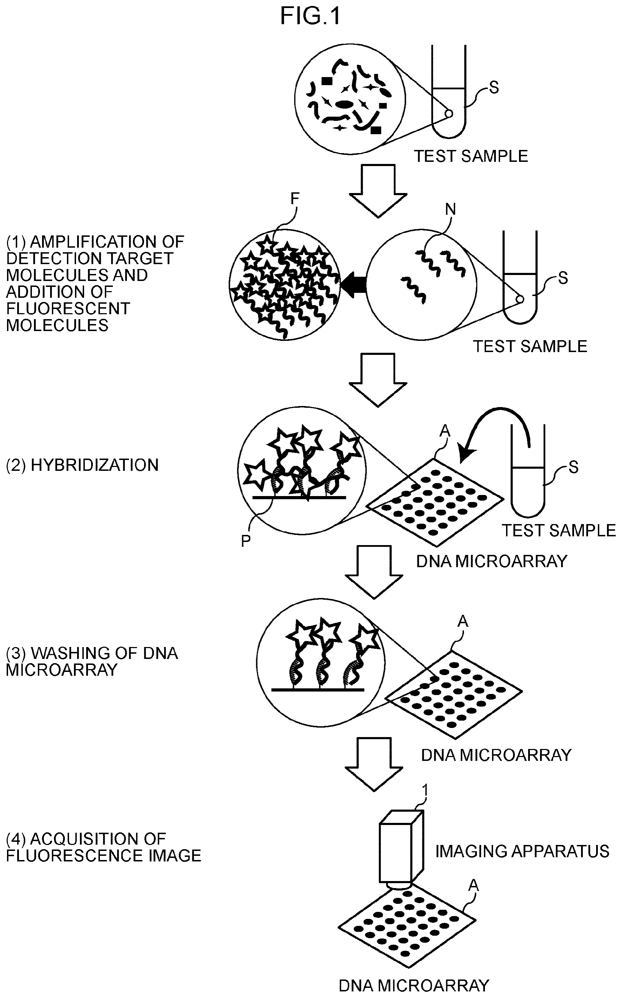

A flow of processing for a DNA microarray method and an image acquisition process according to a reference technique will be described and the image acquisition system 1000 according to the embodiment will thereafter be described in detail, by use of FIG. 1 to FIG. 3. An example related to a detection process by a biopolymer measurement device to measure specific detection target molecules of a biopolymer included in a test sample by the DNA microarray method will be described as the image acquisition system 1000 according to the embodiment, but an application range of the image acquisition system 1000 is not to be particularly limited.

### 1-1. Flow of Processing for DNA Microarray Method

The flow of the processing for the DNA microarray method that the image acquisition process according to the reference technique and the image acquisition system 1000 according to the embodiment are premised on will be described by use of FIG. 1. FIG. 1 is a diagram illustrating an example of the flow of the processing for the DNA microarray method. As illustrating in FIG. 1, the following processing from (1) to (4) is executed in the DNA microarray method.

Firstly, detection target molecules N of a nucleic acid included in a test sample S are amplified by a nucleic acid amplification technique, such as a polymerase chain reaction (PCR), and fluorescent molecules F are added to the detection target molecules N that have been amplified (see (1) in FIG. 1). Secondly, a solution including the detection target molecules N added with the fluorescent molecules F is added into a DNA microarray A, the detection target molecules N that have been fluorescently modified with the fluorescent molecules F are collected through hybridization by means of detection probes P (see (2) in FIG. 1). In this hybridization, complementary nucleic acid sequences of the detection target molecules N have been immobilized as the detection probes P on a solid surface of, for example, a substrate of the DNA microarray A, and the detection target molecules N that have been fluorescently modified bind to the detection probes P. Thirdly, the DNA microarray A is washed for removal of: any detection target molecule N that has not been collected; and the fluorescent molecule F from any molecule that has nonspecifically bound to a nucleic acid sequence of the detection probe P (see (3) in FIG. 1). Fourthly, the DNA microarray A is imaged by an imaging apparatus 1 and a fluorescence image of the DNA microarray A having the fluorescent molecules F collected at DNA spots is acquired (see (4) in FIG. 1).

### 1-2. Image Acquisition Process of Reference Technique

The following description is on the image acquisition process according to the reference technique. An example of processing for the image acquisition process according to the reference technique, fluorescence intensity of a fluorescence image according to the reference technique, and problems in the image acquisition process according to the reference technique will be described hereinafter in this sequence.

### 1-2-1. Example of Processing for Image Acquisition Process According to Reference Technique

The following processing is executed in the image acquisition process according to the reference technique. Firstly, an imaging apparatus emits excitation light of a wavelength according to a fluorescent dye of a fluorescent molecule F to a substrate of a DNA microarray A, and detects fluorescence generated from the DNA microarray A by means of a light receiving element. In this detection, the imaging apparatus adjusts an exposure duration within a range of a few seconds to a few minutes, the exposure duration enabling a signal to be acquired at an acceptable S/N ("signal to noise ratio" as appropriate) according to a fluorescence intensity. Secondly, an image acquisition apparatus calculates a fluorescence intensity of any fluorescent spot detected in the DNA microarray A and estimates an amount of detection target molecules N collected on the DNA microarray A.

### 1-2-2. Fluorescence Intensity of Fluorescence Image According to Reference Technique

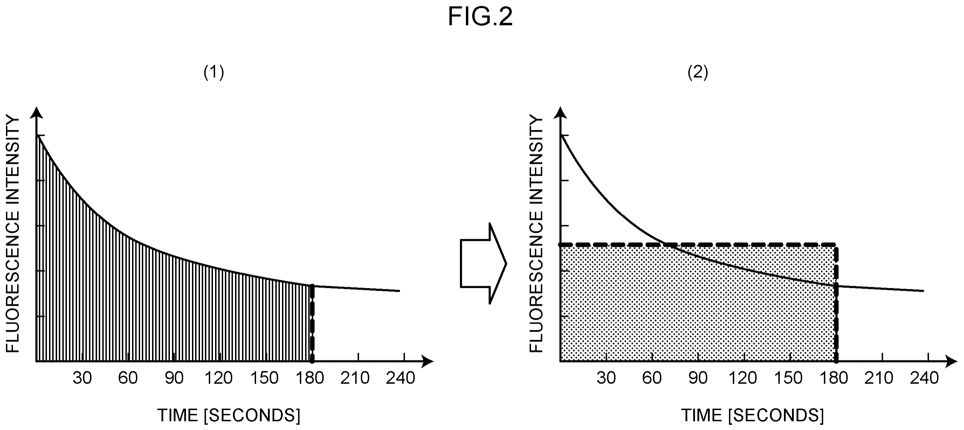

Fluorescence intensity of a fluorescence image, according to the reference technique will be described by use of FIG. 2. FIG. 2 is a diagram for illustration of the fluorescence intensity of the fluorescence image, according to the reference technique. As illustrated by (1) in FIG. 2, the fluorescence intensity (in optional units) decreases over time by photobleaching of the fluorescent dye. An equivalent quantity of light that is a mean value per time period calculated from a total value of fluorescence intensity from the 0th second to the 180th second in (1) in FIG. 2 is illustrated by (2) in FIG. 2.

### 1-2-3. Problems in Image Acquisition Process According to Reference Technique

In the image acquisition process according to the reference technique, a measurement time period needs to be set to a long time period in a case where an amount of fluorescence generated from the DNA microarray A is small. The fluorescent dye undergoes photobleaching during the measurement time period because the fluorescent dye is continually irradiated with the excitation light. Therefore, a large error is generated in an estimation result for the amount of the detection target molecules N collected on the substrate of the DNA microarray A. Furthermore, the longer the measurement time period, the larger the influence of photobleaching and the smaller the calculated amount of the detection target molecules N.

Furthermore, in the image acquisition process according to the reference technique, the influence of photobleaching depends on the density of the fluorescent molecules F and the history of the exposure of the fluorescent dye to light, for example, and correcting the signal after the measurement using photobleaching data acquired beforehand, for example, is thus difficult.

### 1-3. Image Acquisition System 1000

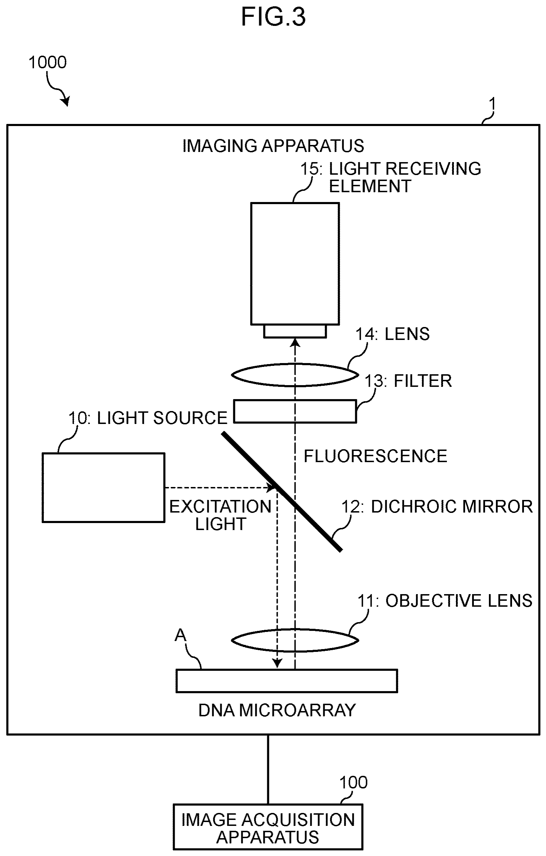

The image acquisition system 1000 according to the embodiment will be described by use of FIG. 3. An example of the configuration of the image acquisition system 1000, an example of the processing in the image acquisition system 1000, and the effects of the image acquisition system 1000 will be described hereinafter in this sequence.

### 1-3-1. Example of Configuration of Image Acquisition System 1000

The example of the configuration of the image acquisition system 1000 according to the embodiment will be described by use of FIG. 3. FIG. 3 is a diagram illustrating the example of the configuration of the image acquisition system 1000 according to the embodiment. The image acquisition system 1000 has an imaging apparatus 1 and the image acquisition apparatus 100. The image acquisition system 1000 illustrated in FIG. 3 may include a plurality of the imaging apparatuses 1 or a plurality of the image acquisition apparatuses 100. Furthermore, the image acquisition apparatus 100 may be configured to be integrated with the imaging apparatus 1.

The imaging apparatus 1 has a light source 10, an objective lens 11, a dichroic mirror 12, a filter 13, a lens 14, and a light receiving element 15. Furthermore, the imaging apparatus 1 images a DNA microarray A, which is a measurement target sample ("measurement target specimen", as appropriate) that has been installed therein.

### 1-3-2. Example of Processing in Image Acquisition System 1000

The example of the processing in the image acquisition system 1000 according to the embodiment will be described by use of FIG. 3. An image acquisition process, a light quantity calculation process, a threshold determination process, a light quantity correction process, and an image addition process, in the image acquisition system 1000 according to the embodiment will be described hereinafter in this sequence.

### 1-3-2-1. Image Acquisition Process

The image acquisition system 1000 according to the embodiment executes the image acquisition process. The following description is on a first image acquisition process of imaging by the imaging apparatus 1 during a first time period and a second image acquisition process of imaging by the imaging apparatus 1 during a second time period.

### First Image Acquisition Process

Firstly, the image acquisition system 1000 executes the first image acquisition process as the image acquisition process. The DNA microarray A, which is the measurement target sample, is installed in the imaging apparatus 1 first. Next, the imaging apparatus 1 emits excitation light (broken lines in FIG. 3) to the DNA microarray A from the light source 10. The imaging apparatus 1 then captures a first image ("first fluorescence image" as appropriate) I1 by forming, by means of the light receiving element 15, an image of fluorescence (a dash-dotted line in FIG. 3) generated from the DNA microarray A. Lastly, the image acquisition apparatus 100 acquires the first image I1 of the DNA microarray A imaged by the imaging apparatus 1.

For example, the first image I1 is an image of fluorescence generated upon irradiation with the excitation light for a fixed exposure duration (for example, three seconds) when the DNA microarray A, which is a measurement target, is measured for the first time. Furthermore, the first image I1 is an image captured in first imaging (from the zeroth second to the third second) of images captured every fixed exposure duration (for example, three seconds) by the imaging apparatus 1, the images being of fluorescence generated upon irradiation with the excitation light over a continuous exposure duration (for example, 300 seconds) when the DNA microarray A, which is the measurement target, is measured for the first time. The first image I1 is preferably an image captured before reduction in amount of fluorescence due to photobleaching of fluorescent molecules F on the DNA microarray A but timing of the imaging and the exposure duration are not to be limited.

### Second Image Acquisition Process

Secondly, the image acquisition system 1000 executes the second image acquisition process as the image acquisition process. The imaging apparatus 1 emits excitation light (broken lines in FIG. 3) to the DNA microarray A from the light source 10 first at a time different from that of the imaging of the first image I1. The imaging apparatus 1 then captures a second image ("second fluorescence image" as appropriate) I2 by forming, by means of the light receiving element 15, an image of fluorescence (a dash-dotted line in FIG. 3) generated from the DNA microarray A. Lastly, the image acquisition apparatus 100 acquires the second image I2 of the DNA microarray A imaged by the imaging apparatus 1.

For example, the second image I2 is an image captured by the imaging apparatus 1, the image being of fluorescence generated upon irradiation with the excitation light for a fixed exposure duration (for example, three seconds) after the first image I1 is acquired. Furthermore, the second image I2 is an image captured in second imaging (from the third second to the sixth second), the image being of the images captured every fixed exposure duration (for example, three seconds) by the imaging apparatus 1, the images being of the fluorescence generated upon the irradiation with the excitation light over the continuous exposure duration (for example, 300 seconds) when the DNA microarray A, which is the measurement target, is measured for the first time. The second image I2 may be an image captured by the imaging apparatus 1 before acquisition of the first image I1 and timing of the imaging and the exposure duration are not to be limited. Furthermore, the second image I2 may be an image captured by the imaging apparatus 1 through control by the image acquisition apparatus 100 in a case where a fluorescence intensity Q1 of the first image I1 is lower than a predetermined signal intensity or a S/N of the fluorescence intensity Q1 of the first image is smaller than a predetermined threshold, according to the threshold determination process described later.

### 1-3-2-2. Light Quantity Calculation Process

The image acquisition system 1000 according to the embodiment executes the light quantity calculation process. Firstly, the image acquisition system 1000 executes a first light quantity calculation process as the light quantity calculation process. That is, the image acquisition apparatus 100 identifies any fluorescent spot in the first image I1 acquired and calculates the fluorescence intensity ("first fluorescence intensity" as appropriate) Q1 of the fluorescent spot as a signal intensity. Secondly, the image acquisition system 1000 executes a second light quantity calculation process as the light quantity calculation process. That is, the image acquisition apparatus 100 detects any fluorescent spot in the second image I2 acquired and calculates a fluorescence intensity ("second fluorescence intensity" as appropriate) Q2 of the fluorescent spot as a signal intensity. The fluorescent spot identified through the first light quantity calculation process described above is a predetermined range on the DNA microarray A and a shape and a size of the fluorescent spot, for example, are not to be particularly limited, the predetermined range being where fluorescence generated upon irradiation of the fluorescent molecules F with the excitation light is observed.

As to the detection of the fluorescent spots, the image acquisition apparatus 100 may determine that a brightness value or a quantity of light of a portion corresponding to a fluorescent spot is significantly larger than that of a portion corresponding to a background, from line profiles of the first image I1 and second image I2, or may detect the fluorescent spots by image processing, such as contour extraction or feature extraction. Furthermore, the image acquisition apparatus 100 may calculate the fluorescence intensity Q2 of the second image I2 in the case where the fluorescence intensity Q1 of the first image I1 is lower than the predetermined signal intensity or the S/N of the fluorescence intensity Q1 of the first image is smaller than the predetermined threshold, according to the threshold determination process described later.

### 1-3-2-3. Threshold Determination Process

The image acquisition system 1000 according to the embodiment executes the threshold determination process. That is, the image acquisition apparatus 100 determines whether or not the fluorescence intensity Q1 of the first image I1 calculated through the first light quantity calculation process described above is equal to or higher than the predetermined signal intensity. Furthermore, the image acquisition apparatus 100 determines whether or not the S/N of the fluorescence intensity of the first image I1 is equal to or larger than the predetermined threshold (for example, 0.3). The image acquisition apparatus 100 then ends the process in a case where the fluorescence intensity Q1 of the first image I1 is equal to or higher than the predetermined signal intensity and the S/N of the fluorescence intensity Q1 of the first image I1 is equal to or larger than the predetermined threshold. On the contrary, the image acquisition apparatus 100 executes the light quantity correction process and image addition process described later in the case where the fluorescence intensity Q1 of the first image I1 is lower than the predetermined signal intensity or the S/N of the fluorescence intensity Q1 of the first image I1 is smaller than the predetermined threshold.

Therefore, the fluorescence intensity Q1 of the first image I1 is found to be sufficient for analysis, such as qualitative analysis or quantitative analysis, in the case where the fluorescence intensity Q1 of the first image I1 is equal to or higher than the predetermined signal intensity and the S/N of the fluorescence intensity Q1 of the first image I1 is equal to or larger than the predetermined threshold. In contrast, correction of the first image I1 is found to be necessary because the fluorescence intensity Q1 of the first image I1 is insufficient for analysis, such as qualitative analysis or quantitative analysis, in the case where the fluorescence intensity Q1 of the first image I1 is lower than the predetermined signal intensity or the S/N of the fluorescence intensity Q1 of the first image I1 is smaller than the predetermined threshold.

### 1-3-2-4. Light Quantity Correction Process

The image acquisition system 1000 according to the embodiment executes the light quantity correction process. That is, the image acquisition apparatus 100 corrects an image so that the fluorescence intensity Q1 of the first image I1 and the fluorescence intensity Q2 of the second image I2 become equal to each other. In correcting the image, the image acquisition apparatus 100 generates a corrected second image I2' resulting from correction of the fluorescence intensity Q2 of the fluorescent spot in the second image I2 in consideration of a reduction in the fluorescence intensity, the reduction being based on influence of photobleaching, after making background light constant from a difference between fluorescence intensities of the background light and the fluorescent spot.

### 1-3-2-5. Image Addition Process

The image acquisition system 1000 according to the embodiment executes the image addition process. That is, the image acquisition apparatus 100 generates an additively corrected fluorescence image I having a signal intensity and a S/N sufficient for analysis, by adding the corrected second image I2' and the first image I1 together, the corrected second image I2' resulting from the correction of the fluorescence intensity Q2 through the light quantity correction process described above. In a case where a fluorescence intensity Q of the additively corrected fluorescence image I is lower than the predetermined signal intensity or a S/N in the additively corrected fluorescence image I is smaller than the predetermined threshold, the image acquisition apparatus 100 repeatedly executes the image acquisition process, the light quantity correction process, and the image addition process.

### 1-4. Effects of Image Acquisition System 1000

An outline of the image acquisition system 1000 according to the embodiment will be described hereinafter and the effects of the image acquisition system 1000 will be described thereafter.

### 1-4-1. Outline

In the image acquisition system 1000, the image acquisition apparatus 100 acquires the first image I1 of the DNA microarray A imaged by the imaging apparatus 1 and the second image I2 of the DNA microarray A imaged by the imaging apparatus 1 and generates the additively corrected fluorescence image I resulting from correction of the first image I1, by adding the corrected second image I2' resulting from the correction of the fluorescence intensity Q2 of the fluorescent spot in the second image I2 to the first image I1, the correction being based on the fluorescence intensity Q1 of the fluorescent spot in the first image I1.

That is, the image acquisition system 1000 corresponds to a technique for executing molecular quantification by correcting influence of photobleaching of the fluorescent molecules F used in detection of the detection target molecules N by means of the DNA microarray A. Furthermore, the image acquisition system 1000 corresponds to a technique for executing light quantity correction on the basis of image data acquired earlier by acquisition of a plurality of images in an exposure duration for short imaging less influenced by photobleaching.

### 1-4-2. Effects

Firstly, the image acquisition system 1000 enables reduction in the quantitative error for the number of molecules, the quantitative error being influenced by photobleaching, and enables improvement in accuracy of detection of the detection target molecules N by the DNA microarray method. Secondly, the image acquisition system 1000 enables a total measurement time period to be shortened, the total measurement time period being necessary for achieving the same S/N. Thirdly, the image acquisition system 1000 enables results of quantification for images with different exposure durations to be equivalent to each other and thus enables a comparison between these results.

### 2. Configuration of Each Apparatus in Image Acquisition System 1000

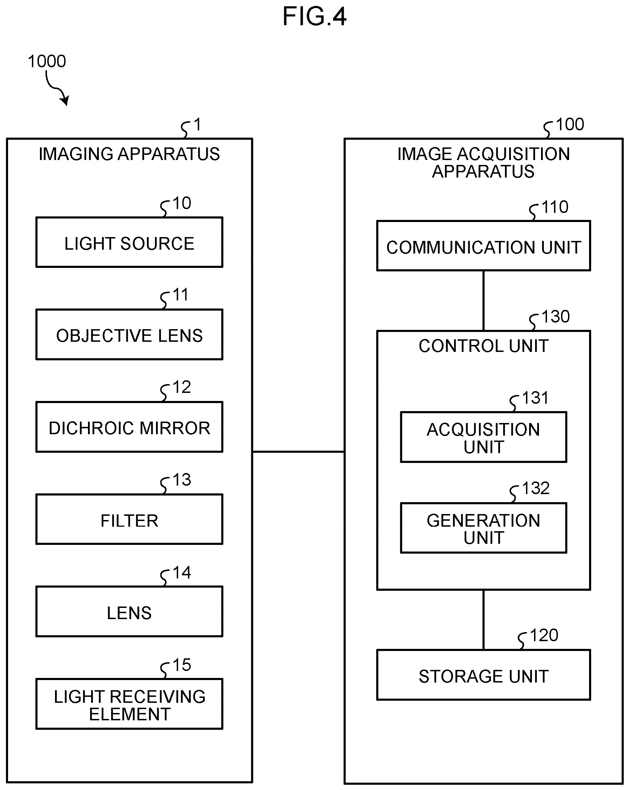

A functional configuration of each apparatus that the image acquisition system 1000 illustrated in FIG. 3 has will be described by use of FIG. 4 to FIG. 7. An example of a configuration of the image acquisition apparatus 100, an example of a configuration of the imaging apparatus 1, and a specific example of fluorescence intensity of a fluorescence image, according to the embodiment will be described in detail hereinafter in this sequence.

### 2-1. Example of Configuration of Image Acquisition Apparatus 100

Firstly, the example of the configuration of the image acquisition apparatus 100 illustrated in FIG. 3 will be described by use of FIG. 4. FIG. 4 is a block diagram illustrating the examples of the configurations of the image acquisition apparatus 100 and the imaging apparatus 1, according to the embodiment. The image acquisition apparatus 100 has a communication unit 110, a storage unit 120, and a control unit 130. The image acquisition apparatus 100 may have: an input unit (for example, a keyboard and a mouse) to receive various kinds of operation from, for example, an administrator of the image acquisition apparatus 100; and/or a display unit (for example, a liquid crystal display) for displaying various kinds of information.

### 2-1-1. Communication Unit 110

The communication unit 110 manages data communication with another apparatus. For example, the communication unit 110 performs data communication with each communication device via a router, for example. Furthermore, the communication unit 110 is capable of performing data communication with a terminal of an operator not illustrated in the drawings.

### 2-1-2. Storage Unit 120

The storage unit 120 stores various kinds of information referred to when the control unit 130 operates, and various kinds of information acquired in operation of the control unit 130. The storage unit 120 may be implemented by, for example: a semiconductor memory element, such as a random access memory (RAM) or a flash memory; or a storage device, such as a hard disk or an optical disk. In the example of FIG. 4, the storage unit 120 has been installed in the image acquisition apparatus 100, but the storage unit 120 may be installed outside the image acquisition apparatus 100 or plural storage units may be installed.

The storage unit 120 stores image data acquired by an acquisition unit 131 of the control unit 130 described later. For example, the storage unit 120 stores image data on the first fluorescence image (first image) I1, the second fluorescence image (second image) I2, and a third fluorescence image (third image) I3, for example, acquired from the imaging apparatus 1.

Furthermore, the storage unit 120 stores image data generated by a generation unit 132 of the control unit 130 described later. For example, the storage unit 120 stores image data on: the second fluorescence image (corrected second image) I2' resulting from the correction of the fluorescence intensity Q2; and the additively corrected fluorescence image I.

### 2-1-3. Control Unit 130

The control unit 130 manages the overall control of the image acquisition apparatus 100. The control unit 130 has the acquisition unit 131 and the generation unit 132. The control unit 130 is implemented by, for example: an electronic circuit, such as a central processing unit (CPU) or a micro processing unit (MPU); or an integrated circuit, such as an application specific integrated circuit (ASIC) or a field programmable gate array (FPGA).

### 2-1-3-1. Acquisition Unit 131

The acquisition unit 131 acquires various images captured by the imaging apparatus 1. The acquisition unit 131 may store the various images acquired, into the storage unit 120.

The acquisition unit 131 acquires the first image I1 of the DNA microarray A, which is the measurement target specimen, imaged in the first time period by the imaging apparatus 1, and the second image I2 of the DNA microarray A imaged in the second time period by the imaging apparatus 1. For example, in the first time period, the acquisition unit 131 acquires the first image I1 of the DNA microarray A imaged by the imaging apparatus 1, with a first predetermined exposure duration (for example, an excitation light irradiation time period of three seconds). Furthermore, in the second time period, the acquisition unit 131 acquires the second image I2 of the DNA microarray A imaged by the imaging apparatus 1, with a second or later one of predetermined exposure durations (for example, an excitation light irradiation time period of three seconds). Furthermore, the acquisition unit 131 similarly acquires the third image I3 captured in a third time period, a fourth image I4 captured in a fourth time period, and so on. The first time period, the second time period, the third time period, the fourth time period, and so on do not indicate any temporal sequence, and the first image I1, the second image I2, the third image I3, the fourth image I4, and so on may be selected and acquired from plural images acquired in any time periods.

In a specific example described herein, the acquisition unit 131 acquires the first image I1 acquired in a short exposure duration of three seconds to avoid any influence of photobleaching resulting from a long exposure duration, the first image I1 being a fluorescence image of the DNA microarray A, which is the measurement target specimen, the fluorescence image having the smallest influence from photobleaching and having been captured by the imaging apparatus 1 for the first time. Furthermore, similarly, the acquisition unit 131 acquires: the second image I2 captured with an exposure duration of three seconds, the exposure duration being the same as that for the first image I1, the second image I2 having the second least influence from photobleaching; the third image I3 captured with an exposure duration of three seconds, the exposure duration being the same as that for the first image I1, the third image I3 having the third least influence from photobleaching; and so on.

The acquisition unit 131 acquires the first image I1 of the DNA microarray A imaged with the predetermined exposure duration (for example, the excitation light irradiation time period of three seconds) by the imaging apparatus 1, and acquires the second image I2 of the DNA microarray A imaged with the predetermined exposure duration (for example, the excitation light irradiation time period of three seconds) by the imaging apparatus in the case where the fluorescence intensity Q1 of the first image I1 is lower than the predetermined signal intensity or has a signal to noise ratio smaller than the predetermined signal to noise ratio. Furthermore, the acquisition unit 131 acquires the third image I3, the fourth image I4, and so on, in the case where the fluorescence intensity Q of the additively corrected fluorescence image I, which is the corrected first image I1 generated by the generation unit 132 described later, is lower than the predetermined signal intensity or has a signal to noise ratio smaller than the predetermined signal to noise ratio.

In a specific example described herein, the acquisition unit 131 acquires the first image I1 of the DNA microarray A, which is the measurement target specimen, imaged with the exposure duration of three seconds by the imaging apparatus 1, and acquires the second image I2 captured with an exposure duration of three seconds, the exposure duration being the same as that for the first image I1, in a case where the S/N of the fluorescence intensity Q1 of the first image I1 is smaller than 0.3. Furthermore, in a case where the S/N of the fluorescence intensity Q of the additively corrected fluorescence image I that is the corrected first image I1 is smaller than 0.3, the acquisition unit 131 acquires the second image I2 captured with the exposure duration of three seconds, the exposure duration being the same as that for the first image I1, and acquires the third image I3, the fourth image I4, and so on until the S/N of the fluorescence intensity Q of the additively corrected fluorescence image I becomes equal to or larger than 0.3.

The acquisition unit 131 acquires the first image I1 and the second image I2 selected from plural fluorescence images of the DNA microarray A imaged every predetermined exposure duration (for example, excitation light irradiation time period of three seconds) at plural times that differ according to the imaging apparatus 1. Furthermore, the acquisition unit 131 similarly acquires the third image I3, the fourth image I4, and so on, selected from the plural fluorescence images captured every predetermined exposure duration (for example, excitation light irradiation time period of three seconds) at the plural times that differ according to the imaging apparatus 1.

In a specific example described herein, the acquisition unit 131 acquires 100 fluorescence images (the first image I1, the second image I2, the third image I3, ..., the 100th image I100) of the DNA microarray A, which is the measurement target specimen, imaged by the imaging apparatus 1 every three seconds, over a continuous exposure duration of 300 seconds, and selects the fluorescence image acquired from the 0th second to the third second as the first image I1, the fluorescence image acquired from the third second to the sixth second as the second image I2, the fluorescence image acquired from the sixth second to the ninth second as the third image I3, and so on.

### 2-1-3-2. Generation Unit 132

The generation unit 132 executes processing related to correction of various images acquired by the acquisition unit 131. The generation unit 132 may store any fluorescence intensity calculated, any image resulting from correction of its fluorescence intensity, and any image generated, into the storage unit 120.

The generation unit 132 generates the corrected second image I2' that is the second image I2 that has been corrected as a result of correction of the fluorescence intensity Q2 (second fluorescence intensity) of the fluorescent spot that generates fluorescence in the second image I2, the correction being based on the fluorescence intensity Q1 (first fluorescence intensity) of the fluorescent spot that generates fluorescence in the first image I1, and generates the additively corrected fluorescence image I resulting from correction of the first image I1, by adding the corrected second image I2' to the first image I1. For example, the generation unit 132 calculates the fluorescence intensity Q1 and the fluorescence intensity Q2, makes background light of the second image I2 and background light of the first image I1 equal to each other by using a difference between the fluorescence intensity Q2 and an intensity of the background light of the second image I2 in the case where the fluorescence intensity Q1 is lower than the predetermined signal intensity or has a S/N smaller than the predetermined signal to noise ratio, corrects the fluorescence intensity Q2 by multiplying the fluorescence intensity Q2 by a reciprocal of a rate of reduction in fluorescence intensity between the fluorescence intensity Q1 and the fluorescence intensity Q2, and generates the additively corrected fluorescence image I having a fluorescent spot with a fluorescence intensity that is equal to or higher than the predetermined signal intensity and that has a signal to noise ratio equal to or larger than the predetermined signal to noise ratio, by adding a corrected fluorescence intensity Q2' to the fluorescence intensity Q1.

In a specific example described herein, in a case where the fluorescence intensity Q1 of the first image I1 is 110 (in optional units), its background light has an intensity of 10 (in the optional units), the fluorescence intensity Q2 of the second image I2 is 100 (in the optional units) and its background light has an intensity of 10 (in the optional units), the generation unit 132 corrects the fluorescence intensity Q2 by multiplying the fluorescence intensity Q2 by 100/90, which is a reciprocal of 90/100, a reduction rate between the fluorescence intensities of the first image I1 and the second image I2, because the difference between the fluorescence intensity and the intensity of the background light is 100 (in the optional units) for the first image I1 and 90 (in the optional units) for the second image I2, and adds the corrected fluorescence intensity Q2' to the fluorescence intensity Q1. This correction of the fluorescence intensity is preferably nonlinear correction, in which the background light becomes constant as described above, but the generation unit 132 may perform linear correction.

In a case where the exposure durations are the same, the images may be assumed to have equal background light. In contrast, in a case where the exposure durations are different from each other, after multiplication by the reciprocal of the ratio between the exposure durations, a difference between a fluorescence intensity and background light is calculated for each of the images, and quantitative results for the images may be compared with each other by always assuming the background light to have a signal intensity of 0 and correcting the fluorescence intensity using the difference.

### 2-2. Example of Configuration of Imaging Apparatus 1

The example of the configuration of the imaging apparatus 1 illustrated in FIG. 3 will be described by use of FIG. 4. The imaging apparatus 1 has the light source 10, the objective lens 11, the dichroic mirror 12, the filter 13, the lens 14, and the light receiving element 15.

### 2-2-1. Light Source 10

The light source 10 is a laser light source and emits laser light to the DNA microarray A that has been installed. For example, the light source 10 may be implemented by a laser light source that emits single-wavelength laser light or expanded light of the laser light, a light emitting diode (LED), a lamp that emits white light, or a light source including a combination of an LED and a wavelength filter.

### 2-2-2. Objective Lens 11

The objective lens 11 transmits or condenses excitation light emitted from the light source 10 upon imaging and guides the excitation light to the DNA microarray A. Furthermore, the objective lens 11 transmits or condenses fluorescence generated from the DNA microarray A and guides the fluorescence to the light receiving element 15 via the dichroic mirror 12, the filter 13, and the lens 14.

### 2-2-3. Dichroic Mirror 12

The dichroic mirror 12 reflects the excitation light emitted from the light source 10 upon imaging and guides the excitation light to the DNA microarray A via the objective lens 11. Furthermore, the dichroic mirror 12 transmits the fluorescence generated from the DNA microarray A and guides the fluorescence to the light receiving element 15 via the filter 13 and the lens 14.

### 2-2-4. Filter 13

The filter 13 transmits the fluorescence generated from the DNA microarray A and guides the fluorescence to the light receiving element 15 via the lens 14. The filter 13 transmits only the fluorescence by removing reflection of the laser light that is irradiation light.

### 2-2-5. Lens 14

The lens 14 transmits or condenses the fluorescence generated from the DNA microarray A and guides the fluorescence to the light receiving element 15.

### 2-2-6. Light Receiving Element 15

The light receiving element 15 converts the fluorescence formed into an image by the lens 14, into an electric signal. For example, the light receiving element 15 may be implemented by an electron multiplying CCD (EM-CCD) or a complementary metal-oxide semiconductor (CMOS).

### 2-3. Specific Examples of Fluorescence Intensity of Fluorescence Image

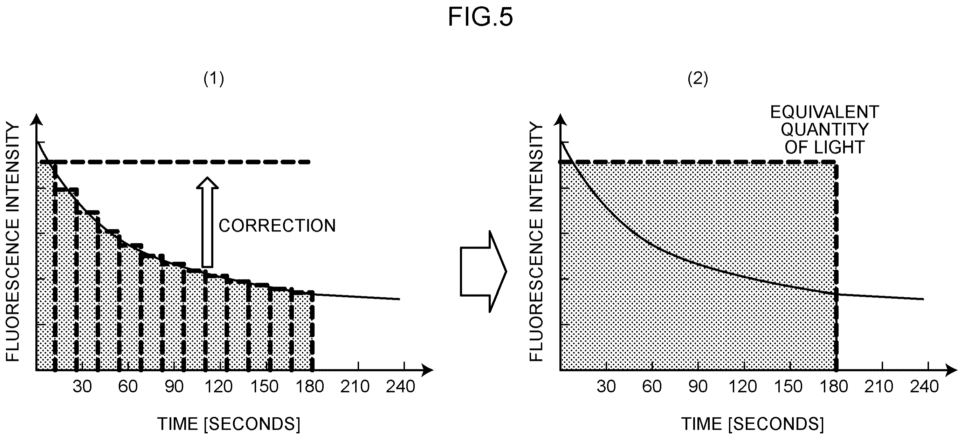

Specific examples of fluorescence intensity of a fluorescence image according to the embodiment will be described by use of FIG. 5 to FIG. 7. FIG. 5 to FIG. 7 are diagrams illustrating the specific examples of the fluorescence intensity of the fluorescence image according to the embodiment. A first specific example related to correction of a fluorescence image, and a second specific example and a third specific example related to effectiveness compared to the reference technique, for example, will be described hereinafter in this sequence.

### 2-3-1. Correction of Fluorescence Image

The first specific example related to the correction of the fluorescence image according to the embodiment will be described by use of FIG. 5. As illustrated by (1) in FIG. 5, the fluorescence intensity (in optional units) is reduced due to photobleaching of the fluorescent dye over time and correction based on the amount of reduction in the fluorescence intensity is executed for each image. Therefore, as illustrated by (2) in FIG. 5, the equivalent quantity of light from the 0th second to the 180th second in (1) in FIG. 5 is able to be acquired as an image of the fluorescence intensity not influenced by photobleaching of the fluorescent dye.

### 2-3-2. Effectiveness of Image Acquisition Process

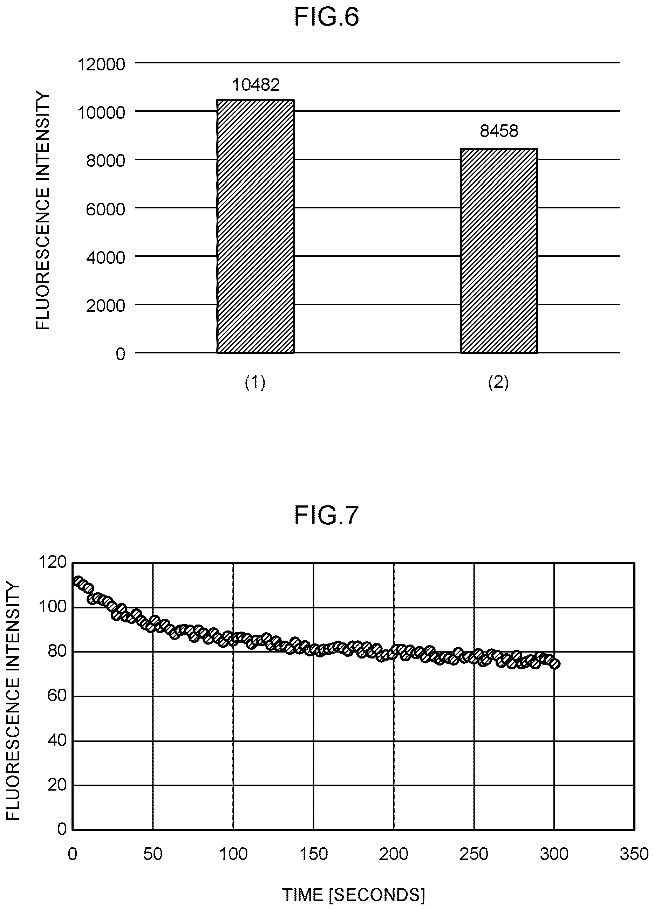

The second specific example and the third specific example related to effectiveness of the image acquisition process according to the embodiment will be described by use of FIG. 6 and FIG. 7. Experimental steps for checking the effectiveness of the image acquisition process according to the embodiment will be described hereinafter, and a result of comparison with, for example, the reference technique, a result of measurement of photobleaching, and discussion on the result of comparison will be described thereafter.

### 2-3-2-1. Experimental Steps

The following description is on the experimental steps for checking the effectiveness of the image acquisition process according to the embodiment. Through the following experimental steps, a DNA molecule, which is a detection target molecule N, labelled with a Cy3 fluorescent molecule, which is a fluorescent molecule F, is detected.

Firstly, PCR amplification is executed using a Cy3 modified primer that enables a 16s ribosomal DNA (16s rDNA) region to be amplified, with a template, which is a genomic DNA extracted from a Staphylococcus aureus strain (NBRC 12732) (first experimental step).

Secondly, a test sample S including the detection target molecules N and having a PCR product concentration diluted to 1 nM, is applied (supplied) to a DNA microarray A having detection probes P immobilized thereon, the detection probes P being for a Staphylococcus aureus 16s rDNA sequence (second experimental step).

Thirdly, the DNA microarray A is incubated for one hour at 66°C and the detection target molecules N are hybridized with the detection probes P (third experimental step).

Fourthly, the DNA microarray A is washed with a twofold standard saline citrate (SSC) solution and a onefold SSC solution and thereafter dried up (fourth experimental step).

Fifthly, on the basis of a first image acquired, second to 100th images are corrected and all of the images are added (fifth experimental step).

Sixthly, as comparison data corresponding to, for example, the reference technique, one image of a DNA microarray A reacted through the first to fourth experimental steps described above is captured with an exposure duration of 300 seconds (sixth experimental step).

### 2-3-2-2. Result of Comparison With Reference Technique

As the second specific example related to the effectiveness of the image acquisition process according to the embodiment, a result of comparison with the reference technique, for example, will be described by use of FIG. 6. In FIG. 6, (1) illustrates, as the image acquisition process according to the embodiment, a fluorescence intensity (10482 optional units) of an image resulting from correction of a fluorescence image acquired with an exposure duration of three seconds and addition of 100 images. In FIG. 6, (2) illustrates, as the image acquisition process according to the reference technique, for example, a fluorescence intensity (8458 optional units) of an image acquired with a continuous exposure duration of 300 seconds.

### 2-3-2-3. Result of Measurement of Photobleaching

As the third specific example related to the effectiveness of the image acquisition process according to the embodiment, the result of measurement of photobleaching will be described by use of FIG. 7. As illustrated in FIG. 7, a fluorescence intensity of about 110 (in optional units) at a measurement time of the 0th second gradually decreases to a fluorescence intensity of about 80 (in the optional units) at a measurement time of the 300th second.

### 2-3-2-4. Discussion on Result of Comparison

From the above, the total fluorescence intensity calculated by the image acquisition process according to the embodiment, that is, the detection target molecules N collected on the DNA microarray A are calculated to be about 20% more than the total fluorescence intensity calculated by the image acquisition process according to the reference technique, for example. Therefore, the image acquisition process according to the embodiment enables correction of the effect of photobleaching in relation to the measurement time period for the fluorescence intensity of the fluorescent spot, illustrated in FIG. 7.

### 3. Flow of Processing in Image Acquisition System 1000

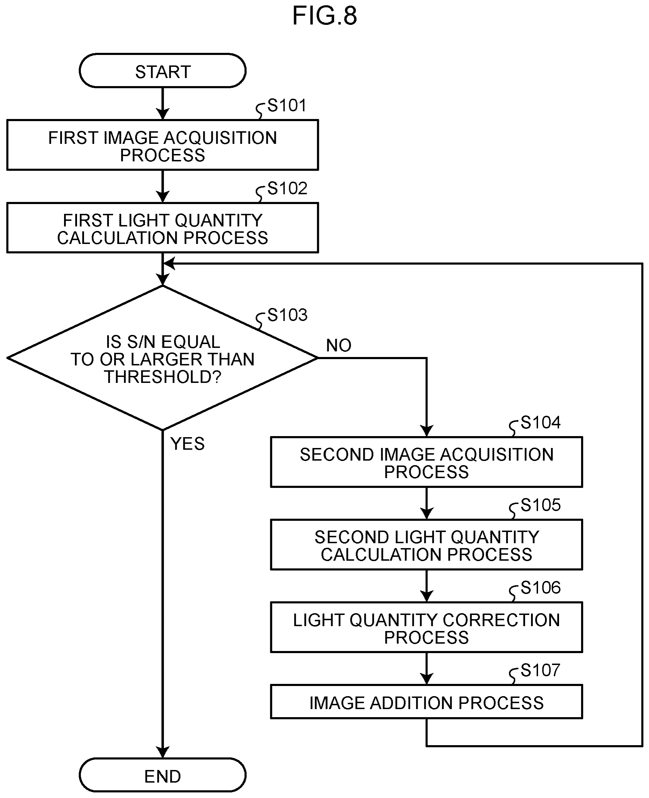

The flow of the processing in the image acquisition system 1000 according to the embodiment will be described by use of FIG. 8. FIG. 8 is a flowchart illustrating an example of the flow of the image acquisition process according to the embodiment. The following processing at Steps S101 to S107 may be executed in a different sequence. Furthermore, some of the processing from Steps S101 to S107 may be omitted.

### 3-1. First Image Acquisition Process

Firstly, the image acquisition apparatus 100 executes the first image acquisition process (Step S101). For example, the image acquisition apparatus 100 acquires a first image I1 of the DNA microarray A imaged by the imaging apparatus 1.

### 3-2. First Light Quantity Calculation Process

Secondly, the image acquisition apparatus 100 executes the first light quantity calculation process (Step S102). For example, the image acquisition apparatus 100 identifies a fluorescent spot in the first image I1 acquired and calculates a fluorescence intensity Q of the fluorescent spot as a signal intensity.

### 3-3. Threshold Determination Process

Thirdly, the image acquisition apparatus 100 executes the threshold determination process (Step S103). For example, the image acquisition apparatus 100 determines whether or not the fluorescence intensity Q1 in the first image I1 is equal to or higher than a predetermined signal intensity and whether or not a S/N of the fluorescence intensity Q1 in the first image I1 is equal to or larger than a predetermined threshold. In a case where the fluorescence intensity Q1 is equal to higher than the predetermined signal intensity and the S/N of the fluorescence intensity Q1 in the first image I1 is equal to or larger than the predetermined threshold (Step S103: Yes), the image acquisition apparatus 100 ends the image acquisition process. On the contrary, in a case where the fluorescence intensity Q1 is lower than the predetermined signal intensity or the S/N of the fluorescence intensity Q1 in the first image I1 is smaller than the predetermined threshold (Step S103: No), the image acquisition apparatus 100 proceeds to processing at Step S104.

### 3-4. Second Image Acquisition Process

Fourthly, the image acquisition apparatus 100 executes the second image acquisition process (Step S104). For example, the image acquisition apparatus 100 acquires a second image I2 of the DNA microarray A imaged by the imaging apparatus 1.

### 3-5. Second Light Quantity Calculation Process

Fifthly, the image acquisition apparatus 100 executes the second light quantity calculation process (Step S105). For example, the image acquisition apparatus 100 identifies a fluorescent spot in the second image I2 acquired, and calculates a fluorescence intensity Q2 of the fluorescent spot as a signal intensity.

### 3-6. Light Quantity Correction Process

Sixthly, the image acquisition apparatus 100 executes the light quantity correction process (Step S106). For example, the image acquisition apparatus 100 corrects an image so that the fluorescence intensity Q1 in the first image I1 and the fluorescence intensity Q2 in the second image I2 become equal to each other.

### 3-7. Image Addition Process

Seventhly, the image acquisition apparatus 100 executes the image addition process (Step S107) and returns to the processing at Step S103. For example, the image acquisition apparatus 100 generates an additively corrected fluorescence image I having a signal intensity and a S/N that are sufficient for analysis, by adding a corrected second image I2' and the first image I1 together, the corrected second image I2' resulting from correction of the fluorescence intensity Q2.

### 4. Effects of Embodiment

Effects of the embodiment will be described lastly. A first effect to a fifth effect corresponding to the processing according to the embodiment will be described hereinafter.

### 4-1. First Effect

Firstly, in the above described processing according to the embodiment, the image acquisition apparatus 100 acquires a first image I1 of the DNA microarray A imaged in a first time period by the imaging apparatus 1 and a second image I2 of the DNA microarray A imaged in a second time period by the imaging apparatus 1, generates a corrected second image I2' resulting from correction of a fluorescence intensity Q2 of a fluorescent spot in the second image I2, the correction being based on a fluorescence intensity Q1 of a fluorescent spot in the first image I1, and generates an additively corrected fluorescence image I resulting from correction of the first image I1, by adding the corrected second image Is' to the first image I1. Therefore, the processing according to the embodiment enables acquisition of a fluorescence image enabling accurate detection in the DNA microarray method.

### 4-2. Second Effect

Secondly, in the above described processing according to the embodiment, the image acquisition apparatus 100 calculates the fluorescence intensity Q1 and the fluorescence intensity Q2, makes background light of the second image I2 and background light of the first image I1 equal to each other by using a difference between the fluorescence intensity Q2 and an intensity of the background light of the second image I2 in a case where the fluorescence intensity Q1 is lower than a predetermined signal intensity or has a signal to noise ratio smaller than a predetermined signal to noise ratio, corrects the fluorescence intensity Q2 by multiplying the fluorescence intensity Q2 by a reciprocal of a rate of reduction in fluorescence intensity between the fluorescence intensity Q2 and the second image I2, and generates the additively corrected fluorescence image I having a fluorescent spot with a fluorescence intensity that is equal to or higher than the predetermined signal intensity and that has a signal to noise ratio equal to or larger than the predetermined signal to noise ratio, by adding the fluorescence intensity Q2 that has been corrected, to the fluorescence intensity Q1. Therefore, the processing according to the embodiment enables acquisition of a fluorescence image enabling accurate detection in the DNA microarray method, the fluorescence image satisfying a signal intensity and a S/N sufficient for execution of analysis.

### 4-3. Third Effect

Thirdly, in the above described processing according to the embodiment, the image acquisition apparatus 100 acquires the first image I1 of the DNA microarray A imaged by the imaging apparatus 1 with a first predetermined exposure duration in the first time period and acquires the second image I2 of the DNA microarray A imaged by the imaging apparatus 1 with a second or later one of predetermined exposure durations in the second time period. Therefore, the processing according to the embodiment enables acquisition of a fluorescence image enabling accurate detection in the DNA microarray method, by acquisition of plural fluorescence images captured with the same exposure duration.

### 4-4. Fourth Effect

Fourthly, in the above described processing according to the embodiment, the image acquisition apparatus 100 acquires the first image I1 of the DNA microarray A imaged by the imaging apparatus 1 with the predetermined exposure duration, and acquires the second image I2 of the DNA microarray A imaged by the imaging apparatus 1 with the predetermined exposure duration in the case where the fluorescence intensity Q1 is lower than the predetermined signal intensity or has a signal to noise ratio smaller than the predetermined signal to noise ratio. Therefore, the processing according to the embodiment enables acquisition of a fluorescence image enabling accurate detection in the DNA microarray method, by acquisition of plural fluorescence images in real time.

### 4-5. Fifth Effect

Fifthly, in the above described processing according to the embodiment, the image acquisition apparatus 100 acquires the first image I1 and the second image I2 selected from plural fluorescence images of the DNA microarray A imaged every predetermined exposure duration at plural times that differ according to the imaging apparatus 1. Therefore, the processing according to the embodiment enables acquisition of a fluorescence image enabling accurate detection in the DNA microarray method, by batch acquisition of plural fluorescence images.

### Application Examples of Embodiment

The following description is on application examples of the embodiment. The present invention is not to be limited by the following application examples of the embodiment.

The embodiment is applicable to specific target molecules, which may be biomolecules, such as nucleic acids, sugar chains, and proteins.

The embodiment is applicable to image acquisition and analysis of DNA microarrays by fluorescence methods, chemiluminescence methods, and colorimetric methods.

The embodiment is applicable to: a nucleic acid sequence measurement device having a probe modified with a signal source, such as a fluorescent molecule, the probe being immobilized on a solid-phase substrate in a DNA microarray, for example; unmodified target detection using a signaling array probe; and microarray detection for a nucleic acid sequence measurement device that does not require washing.

The embodiment is applicable to detection by a nucleic acid sequence measurement device, the detection being detection, in which probes immobilized on a solid-phase substrate in a DNA microarray , for example, capture target molecules modified with signal sources, such as fluorescent molecules, and the captured target molecules are observed.

The embodiment is applicable to detection by a nucleic acid sequence measurement device, the detection being detection, in which probes immobilized on a solid-phase substrate in a DNA microarray capture target molecules having labeling molecules bound thereto, the labeling molecules having been modified with signal sources, such as fluorescent molecules that specifically bind to the target molecules, and the captured target molecules are observed.

The embodiment is applicable to gene expression analysis, genotyping, and base sequence analysis, in a case where nucleic acids are targets.

The embodiment is applicable to sugar chain profiling in a case where sugar chains are targets.

The embodiment is applicable to antibody profiling and protein-protein interaction analysis, in a case where proteins are targets.

The embodiment is applicable to practical industrial uses, such as drug discovery research and development, biomarker detection, disease diagnosis, preventive and prognostic management of diseases, biomarker search, development of diagnostic methods, antigen search for antibodies, plant cultivar identification, genetic identification tests for livestock and agricultural products, genetic recombination tests for foods, allergen labeling tests, microbial detection and microbial identification in environmental health inspection, microbiological tests for product quality control, monitoring of fermentation processes, inocula management in fermentation processes, beneficial bacteria search from microbial materials, and characterization of hazardous bacteria in pharmaceutical and food manufacturing processes.

The embodiment is applicable to image acquisition techniques for fluorescence images by absolute light quantity detection.

### System

The processing steps, control steps, specific names, and information including various data and parameters, which have been described above and illustrated in the drawings may be optionally modified unless particularly stated otherwise.

Furthermore, the components of each apparatus in the drawings have been illustrated functionally and/or conceptually, and are not necessarily physically configured as illustrated in the drawings. That is, specific modes of separation and integration of each apparatus are not limited to those illustrated in the drawings. That is, all or part of each apparatus may be configured to be functionally or physically separated or integrated in any units according to various loads and use situations.

Furthermore, all or any part of the processing functions performed in each apparatus may be implemented by a CPU and a program analyzed and executed by the CPU, or may be implemented as hardware by wired logic.

### Hardware

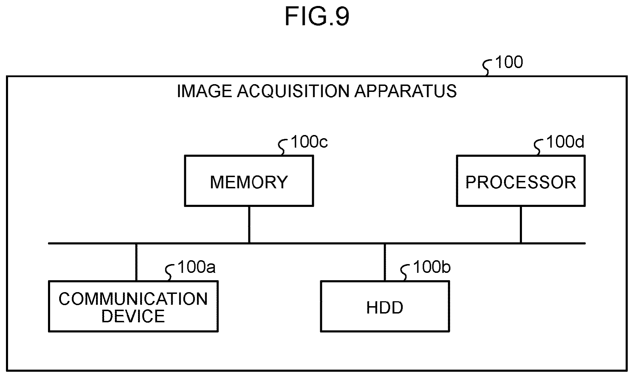

An example of a hardware configuration of the image acquisition apparatus 100 will be described next. FIG. 9 is a diagram illustrating the example of the hardware configuration according to the embodiment. As illustrated in FIG. 9, the image acquisition apparatus 100 has a communication device 100a, a hard disk drive (HDD) 100b, a memory 100c, and a processor 100d. Furthermore, these units illustrated in FIG. 9 are connected to one another via a bus, for example.

The communication device 100a is, for example, a network interface card and performs communication with another server. The HDD 100b stores a DB and a program that causes the functions illustrated in FIG. 4 to operate.

The processor 100d causes a process to be operated, the process executing the functions described by reference to FIG. 4, for example, by reading, from the HDD 100b, the program that executes the same processing as the processing units illustrated in FIG. 4, and loading the program into the memory 100c. For example, this process execute the same functions as the processing units that the image acquisition apparatus 100 has. Specifically, the processor 100d reads a program having functions that are the same as those of the acquisition unit 131 and the generation unit 132 from the HDD 100b, for example. The processor 100d then executes a process that executes processing that is the same as that of the acquisition unit 131 and the generation unit 132, for example.

As described above, the image acquisition apparatus 100 operates as an apparatus that executes various processing methods by reading and executing a program. Furthermore, the image acquisition apparatus 100 may implement functions that are the same as those according to the above described embodiment by reading the program from a recording medium by means of a medium reading device, and executing the program read. The program referred to with respect to this other embodiment is not to be limited to being executed by the image acquisition apparatus 100. For example, the present invention may be similarly applied to a case where another computer or server executes the program, or a case where the computer and the server execute the program in corporation with each other.

This program may be distributed via a network, such as the Internet. Furthermore, the program may be executed by being recorded in a computer-readable recording medium, such as a hard disk, a flexible disk (FD), a CD-ROM, a magneto-optical disk (MO), or a digital versatile disc (DVD), and being read from the recording medium by a computer.

### Others

The following are some examples of a combination of technical features disclosed herein.
(1) An image acquisition apparatus, comprising: an acquisition unit that acquires a first fluorescence image of a measurement target specimen imaged in a first time period by an imaging apparatus and a second fluorescence image of the measurement target specimen imaged in a second time period by the imaging apparatus; and a generation unit that generates a corrected fluorescence image resulting from correction of a second fluorescence intensity of a fluorescent spot that generates fluorescence in the second fluorescence image, the correction being based on a first fluorescence intensity of a fluorescent spot that generates fluorescence in the first fluorescence image, and generates an additively corrected fluorescence image resulting from correction of the first fluorescence image, by adding the corrected fluorescence image to the first fluorescence image.
(2) The image acquisition apparatus according to (1), wherein the generation unit calculates the first fluorescence intensity and the second fluorescence intensity, makes background light of the second fluorescence image and background light of the first fluorescence image equal to each other by using a difference between the second fluorescence intensity and an intensity of the background light of the second fluorescence image in a case where the first fluorescence intensity is lower than a predetermined signal intensity or has a signal to noise ratio smaller than a predetermined signal to noise ratio, corrects the second fluorescence intensity by multiplying the second fluorescence intensity by a reciprocal of a rate of reduction in fluorescence intensity between the first fluorescence intensity and the second fluorescence intensity, and generates the additively corrected fluorescence image having a fluorescent spot with a fluorescence intensity equal to or higher than the predetermined signal intensity, the fluorescence intensity having a signal to noise ratio equal to or larger than the predetermined signal to noise ratio, by adding the second fluorescence intensity that has been corrected, to the first fluorescence intensity.
(3) The image acquisition apparatus according to (1) or (2), wherein the first time period is a first predetermined exposure duration that the measurement target specimen has been imaged with by the imaging apparatus, and the second time period is a second or later one of predetermined exposure durations that the measurement target specimen has been imaged with by the imaging apparatus.
(4) The image acquisition apparatus according to any one of (1) to (3), wherein the acquisition unit acquires the first fluorescence image of the measurement target specimen imaged with a/the predetermined exposure duration by the imaging apparatus, and acquires the second fluorescence image of the measurement target specimen imaged with a/the predetermined exposure duration by the imaging apparatus in a case where the first fluorescence intensity is lower than a/the predetermined signal intensity or has a signal to noise ratio smaller than a/the predetermined signal to noise ratio.
(5) The image acquisition apparatus according to any one of (1) to (4), wherein the acquisition unit acquires the first fluorescence image and the second fluorescence image selected from plural fluorescence images of the measurement target specimen imaged every predetermined exposure duration at plural times that differ according to the imaging apparatus.
(6) The image acquisition apparatus according to any one of (1) to (5), wherein the measurement target specimen is a DNA microarray.
(7) An image acquisition method, wherein a computer executes a process including: acquiring a first fluorescence image of a measurement target specimen imaged in a first time period by an imaging apparatus and a second fluorescence image of the measurement target specimen imaged in a second time period by the imaging apparatus; and generating a corrected fluorescence image resulting from correction of a second fluorescence intensity of a fluorescent spot in the second fluorescence image, the correction being based on a first fluorescence intensity of a fluorescent spot in the first fluorescence image, and generating an additively corrected fluorescence image resulting from correction of the first fluorescence image, by adding the corrected fluorescence image to the first fluorescence image.
(8) An image acquisition program that causes a computer to execute a process including: acquiring a first fluorescence image of a measurement target specimen imaged in a first time period by an imaging apparatus and a second fluorescence image of the measurement target specimen imaged in a second time period by the imaging apparatus; and generating a corrected fluorescence image resulting from correction of a second fluorescence intensity of a fluorescent spot in the second fluorescence image, the correction being based on a first fluorescence intensity of a fluorescent spot in the first fluorescence image, and generating an additively corrected fluorescence image resulting from correction of the first fluorescence image, by adding the corrected fluorescence image to the first fluorescence image.

### Reference Signs List

- 1: IMAGING APPARATUS

- 10: LIGHT SOURCE
- 11: OBJECTIVE LENS
- 12: DICHROIC MIRROR
- 13: FILTER
- 14: LENS
- 15: LIGHT RECEIVING ELEMENT
- 100: IMAGE ACQUISITION APPARATUS
- 110: COMMUNICATION UNIT
- 120: STORAGE UNIT
- 130: CONTROL UNIT
- 131: ACQUISITION UNIT
- 132: GENERATION UNIT
- 1000: IMAGE ACQUISITION SYSTEM

## Claims

1. An image acquisition apparatus, comprising:
an acquisition unit that acquires a first fluorescence image of a measurement target specimen imaged in a first time period by an imaging apparatus and a second fluorescence image of the measurement target specimen imaged in a second time period by the imaging apparatus;
and
a generation unit that generates a corrected fluorescence image resulting from correction of a second fluorescence intensity of a fluorescent spot that generates fluorescence in the second fluorescence image, the correction being based on a first fluorescence intensity of a fluorescent spot that generates fluorescence in the first fluorescence image, and generates an additively corrected fluorescence image resulting from correction of the first fluorescence image, by adding the corrected fluorescence image to the first fluorescence image.

2. The image acquisition apparatus according to claim 1, wherein the generation unit
calculates the first fluorescence intensity and the second fluorescence intensity, makes background light of the second fluorescence image and background light of the first fluorescence image equal to each other by using a difference between the second fluorescence intensity and an intensity of the background light of the second fluorescence image in a case where the first fluorescence intensity is lower than a predetermined signal intensity or has a signal to noise ratio smaller than a predetermined signal to noise ratio, and corrects the second fluorescence intensity by multiplying the second fluorescence intensity by a reciprocal of a ratio of reduction in fluorescence intensity between the first fluorescence intensity and the second fluorescence intensity, and
generates the additively corrected fluorescence image having a fluorescent spot with a fluorescence intensity equal to or higher than the predetermined signal intensity, the fluorescence intensity having a signal to noise ratio equal to or larger than the predetermined signal to noise ratio, by adding the second fluorescence intensity that has been corrected, to the first fluorescence intensity.

3. The image acquisition apparatus according to claim 1, wherein
the first time period is a first predetermined exposure duration that the measurement target specimen has been captured with by the imaging apparatus, and
the second time period is a second or later one of predetermined exposure durations that the measurement target specimen has been captured with by the imaging apparatus.

4. The image acquisition apparatus according to claim 1, wherein the acquisition unit
acquires the first fluorescence image of the measurement target specimen imaged with a predetermined exposure duration by the imaging apparatus, and
acquires the second fluorescence image of the measurement target specimen imaged with the predetermined exposure duration by the imaging apparatus in a case where the first fluorescence intensity is lower than a predetermined signal intensity or has a signal to noise ratio smaller than a predetermined signal to noise ratio.

5. The image acquisition apparatus according to claim 1, wherein the acquisition unit acquires the first fluorescence image and the second fluorescence image selected from plural fluorescence images of the measurement target specimen imaged every predetermined exposure duration at plural times that differ according to the imaging apparatus.

6. The image acquisition apparatus according to any one of claims 1 to 5, wherein the measurement target specimen is a DNA microarray.

7. An image acquisition method, wherein a computer executes a process including:
acquiring a first fluorescence image of a measurement target specimen imaged in a first time period by an imaging apparatus and a second fluorescence image of the measurement target specimen imaged in a second time period by the imaging apparatus;
generating a corrected fluorescence image resulting from correction of a second fluorescence intensity of a fluorescent spot that generates fluorescence in the second fluorescence image, the correction being based on a first fluorescence intensity of a fluorescent spot that generates fluorescence in the first fluorescence image; and
generating an additively corrected fluorescence image resulting from correction of the first fluorescence image, by adding the corrected fluorescence image to the first fluorescence image.

8. An image acquisition program that causes a computer to execute a process including:
acquiring a first fluorescence image of a measurement target specimen imaged in a first time period by an imaging apparatus and a second fluorescence image of the measurement target specimen imaged in a second time period by the imaging apparatus;
generating a corrected fluorescence image resulting from correction of a second fluorescence intensity of a fluorescent spot that generates fluorescence in the second fluorescence image, the correction being based on a first fluorescence intensity of a fluorescent spot that generates fluorescence in the first fluorescence image; and
generating an additively corrected fluorescence image resulting from correction of the first fluorescence image, by adding the corrected fluorescence image to the first fluorescence image.
